# EUROPEAN PATENT SPECIFICATION

(11) **EP 1 871 103 B1**
(45) Date of publication and mention of the grant of the patent: **05.06.2013**
(21) Application number: 07104625.4
(22) Date of filing: 21.03.2007
(51) Int. Cl.: G06F 3/048, H04N 5/445

(54) **Method and apparatus for providing a menu screen**
Verfahren und Vorrichtung zur Bereitstellung eines Menü-Bildschirms
Procédé et appareil pour fournir un écran de menu

(30) Priority: 21.06.2006 KR 20060055986
(43) Date of publication of application: 26.12.2007
(73) Proprietor: Samsung Electronics Co., Ltd., Suwon-si, Gyeonggi-do, 443-742 (KR)
(72) Inventor: Lee, Sang-hee, Seodaemun-gu, Seoul (KR); Kim, Dae-gu, Jung-gu, Seoul (KR); Yim, Jin-ho, Suwon-si, Gyeonggi-do (KR); Lee, Dong-heon, Seocho-gu, Seoul (KR); Kim, Won-il, Chungcheongbuk-do (KR)
(74) Representative: Walaski, Jan Filip

(56) References cited:
- EP-A2- 0 249 293
- WO-A1-2005/036875
- DE-A1- 10 360 659
- US-A1- 2002 041 292

## Description

The present invention relates to providing a menu screen, and more particularly, to displaying a menu having a hierarchical structure on a screen to provide the menu to a user.

Video apparatuses, such as televisions (TVs) and set-top boxes, have various, complicated functions. Thus, menu screens, which are provided as user interfaces through screens by the video apparatuses, have been diverse and complicated.

Because video apparatuses have many functions, a large number of menu items for explaining the functions are provided on menu screens. Thus, menu screens displaying such menu items in hierarchical structures are widely used to visually arrange the menu items. Meanwhile, it is necessary to show the selected menu items of hierarchical structure effectively so that the users can glance through the menu items.

However, not all of the selected menu items may be displayed on a screen when there are too many menu items selected.

Document DE 10 360 659 discloses a menu structure involving markers.

The present invention provides a method for providing a menu screen which shows the selected menu items of a hierarchical structure in a lateral pattern on a screen so that the users can recognize relative positions of the selected menu items at a glance and recognize that there are other menu items besides the menu selected and displayed on the screen.

According to an aspect of the present invention, there is provided a method for providing a menu screen, including: generating a menu screen that displays a selected menu item and at least one of a plurality of sub-menu items of the selected menu item on a reference line and indicates the relative position of a selected sub-menu item with reference to the reference line; and combining the generated menu screen with a video to be displayed.

According to another aspect of the present invention, there is provided a video apparatus, which includes a combiner that combines a video to be displayed with specified information; and a controller that generates a menu screen that displays a selected menu item and at least one of a plurality of sub-menu items of the selected menu item on a reference line and indicates the relative position of a selected sub-menu item with reference to the reference line, and controls the combiner to combine the generated menu screen with a video to be displayed.

The relative position of the selected sub-menu item may be indicated using the reference line and a position guide which is orthogonal to the reference line.

The position guide may indicate the number of sub-menu items above the selected sub-menu item and the number of sub-menu items below the selected sub-menu item.

The position guide includes marks. The number of marks between the reference line and the top of the position guide indicates the number of sub-menu items above the selected sub-menu item, and the number of marks between the reference line and the bottom of the position guide indicates the number of sub-menu items below the selected sub-menu item.

The reference line may extend horizontally on the menu screen, and the position guide may extend vertically on the menu screen.

The position guide may comprise symbols at a top and a bottom in symmetry to each other.

The above and other aspects of the present invention will be more apparent by describing certain exemplary embodiments of the present invention with reference to the accompanying drawings, in which:
Figure 1 is a block diagram illustrating a video apparatus according to an exemplary embodiment of the present invention;
Figure 2 is a flowchart illustrating a method for providing a menu screen according to an exemplary embodiment of the present invention;
Figures 3 and 4 are views illustrating a menu screen generated in operation S250 of the method of Figure 2, according to exemplary embodiments of the present invention;
Figures 5 and 6 are views illustrating the menu screen generated in operation S250 of the method of Figure 2, according to exemplary embodiments of the present invention;
Figure 7 is a block diagram of a video apparatus according to another exemplary embodiment of the present invention; and
Figure 8 is a flowchart illustrating a method of providing menu screen according to another exemplary embodiment of the present invention.

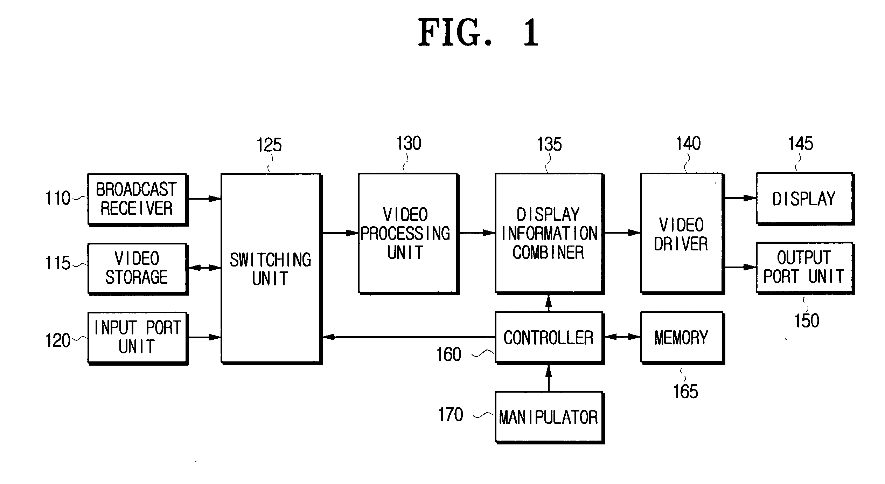

Figure 1 is a block diagram illustrating a video apparatus according to an exemplary embodiment of the present invention. The video apparatus according to an exemplary embodiment displays a menu of a hierarchical structure on a screen as an interface between a user and the video apparatus. The video apparatus displays selected menu items laterally on the menu screen. Additionally, the menu items are laterally displayed on the menu screen such that the user can readily recognize relative positions of the menu items.

As shown in Figure 1, the video apparatus includes a broadcast receiver 110, a video storage 115, an input port unit 120, a switching unit 125, a video processing unit 130, a display information combiner 135, a video driver 140, a display 145, an output port unit 150, a controller 160, a memory 165, and a manipulator 170.

The broadcast receiver 110 tunes and demodulates a television (TV) broadcast. The video storage 115 stores a video or reads a stored video. The input port unit 120 communicates with an external device to transmit data to and/or receive data from the external device.

The switching unit 125 performs a switching operation to transmit one of a plurality of videos output from the broadcast receiver 110, the video storage 115, and the input port unit 120 to the video processing unit 130. The switching operation of the switching unit 125 is controlled by the controller 160 that will be described later.

The video processing unit 130 processes the video received through the switching unit 125 to display the video.

The display information combiner 135 combines the video output from the video processing unit 130 with display information such as characters, symbols, figures, graphics, etc. The display information combiner 135 may combine the display information using an on-screen display (OSD) method. The combination processing operation of the display information combiner 135 is controlled by the controller 160.

The video driver 140 displays the video combined with the display information on the display 145 or transmits the video to an external device through the output port unit 150, wherein the video is output from the display information combiner 135.

The controller 160 controls the video apparatus using a program and data stored in the memory 165 according to a manipulation command of a user input through the manipulator 170.

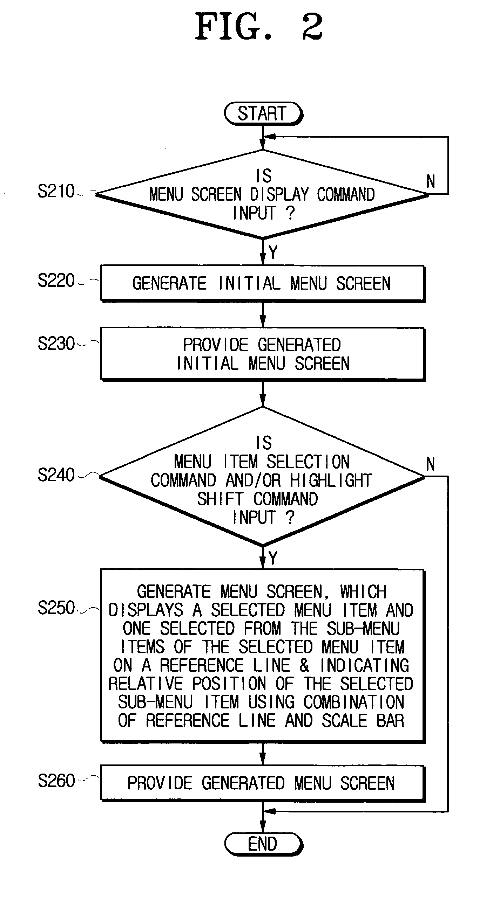

In particular, the controller 160 controls the video apparatus to display a menu screen on a screen so that the user may interface with the video apparatus. A process of providing signals for the menu screen in the controller 160 will now be described with reference to Figure 2.

Figure 2 is a flowchart illustrating a method for providing signals for a menu screen according to an exemplary embodiment of the present invention. Referring to Figure 2, in operation S210, a determination is made as to whether a menu screen display command has been input from a user through the manipulator 170. If it is determined in operation S210 that the menu screen display command has been input, the controller 160 generates signals for displaying an initial menu screen in operation S220. In operation S230, the controller 160 controls the display information combiner 135 to provide the initial menu screen on a screen. Thus, a video combined with the initial menu screen is displayed on the display 145.

Menu items are displayed on the initial menu screen, and a highlight (a cursor) is positioned in one of the displayed menu items.

In operation S240, it is determined whether a menu screen selection command and/or a highlight shift command have been input from the user through the manipulator 170. If it is determined in operation S240 that the menu screen selection command and/or the highlight shift command have been input, the controller 160 generates a menu screen, which laterally displays the selected menu items and indicates the relative position of the lowest menu item using a vertical scale bar according to the menu screen selection command and/or the highlight shift command in operation S250. In operation S260, the controller 160 controls the display information combiner 135 to provide the menu screen generated in operation S250 on the screen. Thus, a video combined with the menu screen generated in operation S250 is displayed on the display 145.

The menu screen generated in operation S250 will now be described in detail.

A selected menu item and one that is selected from the sub-menu items of the selected menu item are shown on the same line on the menu screen generated in operation S250.

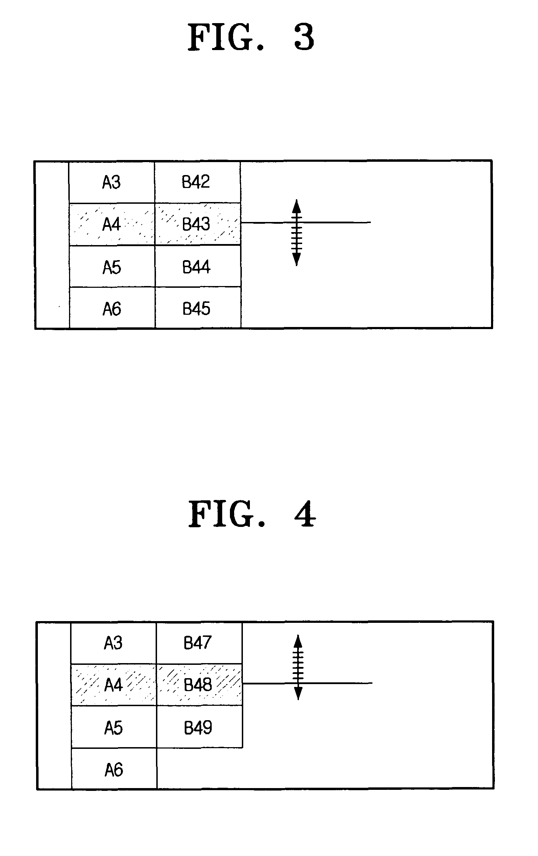

Figure 3 illustrates the menu screen generated in operation S250 according to an exemplary embodiment of the present invention. Referring to Figure 3, the menu item A4 and one sub-menu item B43 that is selected from plurality of sub-menu items of the selected menu item A4 are displayed on the same line.

Also, the relative position of the selected sub-menu item is displayed on the menu screen generated in operation S250. The relative position of the selected sub-menu item may be displayed using a vertical scale bar which moves up and down the menu items.

The scale bar is displayed on the right side of the sub-menu items B42 through B45. Referring to Figure 3, a reference line extends from the selected menu item and its selected sub-menu item, and the vertical menu bar as the position guide is shown in an orthogonal relation to the reference line.

The marks (including the arrow marks) on the scale bar indicate: i) the number of sub-menu items above the currently selected sub-menu item; and ii) the number of sub-menu items below the currently selected sub-menu item.

In more detail, the number of marks above the reference line indicates the number of sub-menu items above the currently selected sub-menu item, and the number of marks below the reference line indicates the number of sub-menu items before the currently selected sub-menu item.

Referring to Figure 3, there are two marks (including one arrow mark) above the reference line. Thus, the user can know that there are two sub-menus B41 and B42 above the currently selected sub-menu item B43. Likewise, because there are six marks (including one arrow mark) above the reference line, the user recognizes that there are six sub-menu items B44, B45, B46, B47, B48, and B49 below the currently selected sub-menu item B43.

Referring to Figure 4, because the number of marks above the reference line is "7," the user recognizes that there are seven sub-menu items B41, B42, B43, B44, B45, B46, and B47 above the currently selected sub-menu item B48. Also, because there is only one mark, that is the arrow mark, below the reference line, the user recognizes that there is one sub-menu item B49 below the currently selected sub-menu item B48.

The arrow marks "▲, ▼" are on the top and bottom of the scale bar in symmetry to each other as shown in Figures 3 and 4 to assist the user in perceiving the menu items.

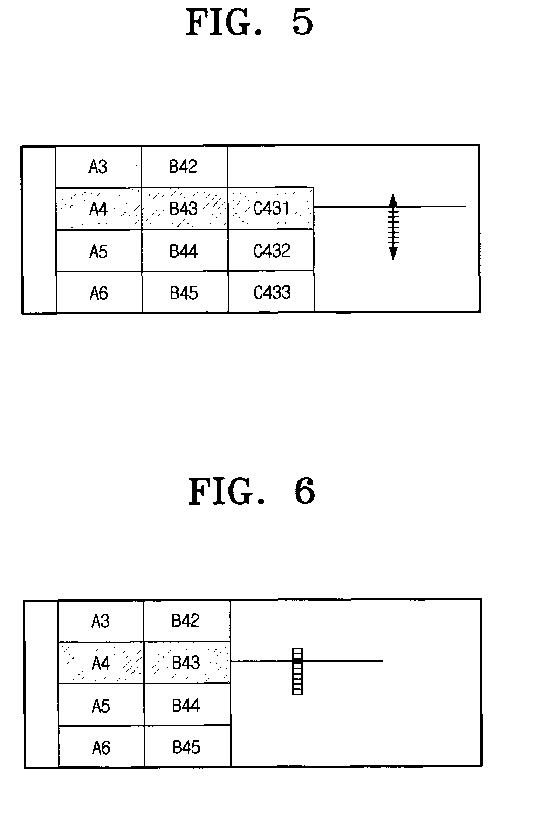

Figures 5 and 6 illustrate the menu screen generated in operation S250, according to another exemplary embodiment of the present invention. Exemplary embodiments of the present invention may be applied to a menu screen having a three or more hierarchical structure shown in Figure 5 as well as to the menu screen having a two hierarchical structure shown in Figures 3 and 4. Additionally, the position guide may have various forms in addition to the scale bar shown in Figures 3 through 5, such as the one shown in Figure 6.

Although not shown in Figures 5 and 6, the position guide displayed on the menu screen may not have the marks.

In addition, although the position guide of Figures 3 through 6 indicate the sub-menu item, in an alternative example, the position guide may also indicate the upper menu items. In this case, the position guide of the upper menu items may be displayed between upper menu items and sub-menu items.

Since the video apparatus illustrated in Figure 1 is only one of various exemplary embodiments, it is not strictly necessary that a video apparatus includes all of blocks illustrated in Figure 1. In other words, unnecessary blocks may be omitted. For example, the display 145 may be omitted if the video apparatus is a set-top box.

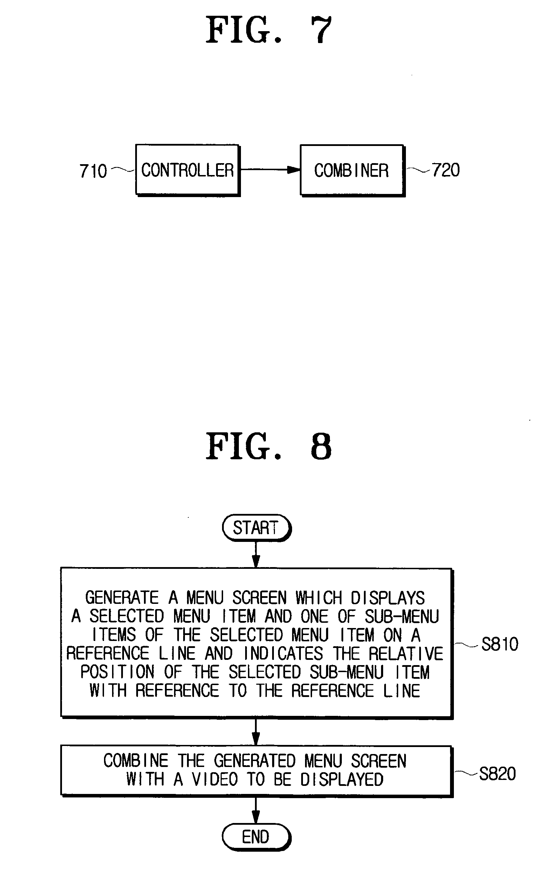

Another exemplary embodiment of the present invention will be explained below with reference to Figures 7 and 8.

With reference to Figure 7, a video apparatus according to another exemplary embodiment of the present invention includes a controller 710 and a combiner 720. The combiner combines a video to be displayed with specified information. The controller 710 generates a menu screen which displays a selected menu item and one of a plurality of sub-menu items of the selected menu item on a reference line and indicates the relative position of a selected sub-menu item with reference to the reference line, and controls the combiner 720 to combine the generated menu screen with a video to be displayed.

With reference to Figure 8, the controller 710 generates a menu screen which displays a selected menu item and one of a plurality of sub-menu items of the selected menu item on a reference line and indicates the relative position of a selected sub-menu item with reference to the reference line (S810), and controls the combiner 720 to combine the generated menu screen with a video to be displayed (S820).

As described above, according to the exemplary embodiments of the present invention, a user can be provided with a menu screen which displays selected menu items of the menu of a hierarchical structure laterally on the same line, such that the user can recognize the relative positions of the selected menu items at a glance. Additionally, the user can know that there are other menu items even when some menu items are not displayed on the screen.

While the invention has been shown and described with reference to certain embodiments thereof, it will be understood by those skilled in the art that various changes in form and details may be made therein without departing from the scope of the invention as defined by the appended claims.

## Claims

1. A method for providing a menu screen, the method comprising:
generating a menu screen which displays a reference line at a fixed position, displays both a selected menu item and a selected sub-menu item of a plurality of sub-menu items of the selected menu item on the reference line, the reference line extending horizontally on the selected menu item and the selected sub-menu item, and displays a series of markers representing each of the sub-menu items orthogonally to the reference line; and
combining the menu screen with a video to be displayed;
wherein the series of markers is moved up and down according to the selected sub-menu item, such that the marker corresponding to the selected sub-menu item is aligned with the reference line to indicate a relative position of the selected sub-menu item to the other sub-menu items.

2. The method as claimed in claim 1, wherein the series of markers indicates a number of the plurality of sub-menu items before the selected sub-menu item and a number of the plurality of sub-menu items after the selected sub-menu item.

3. The method as claimed in any one of the preceding claims, wherein the series of markers comprises symbols at the top and bottom of the series which are symmetrical to each other.

4. A video apparatus comprising:
a combiner that combines a video to be displayed with specified information;
and
a controller that generates a menu screen which displays a reference line at a fixed position, displays both a selected menu item and a selected sub-menu item of a plurality of sub-menu items of the selected menu item on the reference line, the reference line extending horizontally on the selected menu item and the selected sub-menu item, and displays a series of markers representing each of the sub-menu items orthogonally to the reference line;
wherein the series of markers is moved up and down according to the selected sub-menu item, such that the marker corresponding to the selected sub-menu item is aligned with the reference line to indicate a relative position of the selected sub-menu item to the other sub-menu items.

5. The video apparatus as claimed in claim 4, wherein the series of markers indicates a number of the plurality of sub-menu items before the selected sub-menu item and a number of the plurality of sub-menu items after the selected sub-menu item.

6. The video apparatus as claimed in claim 4 or claim 5, wherein the series of markers comprises symbols at a top of the series and a bottom of the series which are symmetrical to each other.

## Patentansprüche

1. Verfahren zum Bereitstellen eines Menübildschirms, wobei das Verfahren Folgendes beinhaltet:
Erzeugen eines Menübildschirms, der eine Referenzlinie an einer festen Position anzeigt, sowohl einen gewählten Menügegenstand als auch einen gewählten Untermenügegenstand aus einer Mehrzahl von Untermenügegenständen des gewählten Menügegenstands auf der Referenzlinie anzeigt, wobei die Referenzlinie horizontal auf dem gewählten Menügegenstand und dem gewählten Untermenügegenstand verläuft, und eine Serie von Markierungen anzeigt, die jeweils jeden der Untermenügegenstände orthogonal zu der Referenzlinie repräsentieren; und
Kombinieren des Menübildschirms mit einem anzuzeigenden Video;
wobei die Serie von Markierungen gemäß dem gewählten Untermenügegenstand auf- und abwärts bewegt wird, so dass die dem gewählten Untermenügegenstand entsprechende Markierung auf die Referenzlinie ausgerichtet ist, um eine relative Position des gewählten Untermenügegenstands zu den anderen Untermenügegenständen anzuzeigen.

2. Verfahren nach Anspruch 1, wobei die Serie von Markierungen eine Anzahl aus der Mehrzahl von Untermenügegenständen vor dem gewählten Untermenügegenstand und eine Anzahl aus der Mehrzahl von Untermenügegenständen nach dem gewählten Untermenügegenständen anzeigt.

3. Verfahren nach einem der vorherigen Ansprüche, wobei die Serie von Markierungen Symbole am Anfang und am Ende der Serie beinhaltet, die symmetrisch zueinander sind.

4. Videovorrichtung, die Folgendes umfasst:
einen Kombinator, der ein anzuzeigendes Video mit vorgegebenen Informationen kombiniert; und
eine Steuerung, die einen Menübildschirm erzeugt, der eine Referenzlinie an einer festen Position anzeigt, sowohl einen gewählten Menügegenstand als auch einen gewählten Untermenügegenstand aus einer Mehrzahl von Untermenügegenständen des gewählten Menügegenstands auf der Referenzlinie anzeigt, wobei die Referenzlinie horizontal auf dem gewählten Menügegenstand und dem gewählten Untermenügegenstand verläuft, und eine Serie von Markierungen anzeigt, die jeweils die Untermenügegenstände orthogonal zur Referenzlinie repräsentieren;
wobei die Serie von Markierungen gemäß dem gewählten Untermenügegenstand auf- und abwärts bewegt wird, so dass die dem gewählten Untermenügegenstand entsprechende Markierung auf die Referenzlinie ausgerichtet ist, um eine relative Position des gewählten Untermenügegenstands zu den anderen Untermenügegenständen anzuzeigen.

5. Videovorrichtung nach Anspruch 4, wobei die Serie von Markierungen eine Anzahl aus der Mehrzahl von Untermenügegenständen vor dem gewählten Untermenügegenstand und eine Anzahl aus der Mehrzahl von Untermenügegenständen nach dem gewählten Untermenügegenstand anzeigt.

6. Videovorrichtung nach Anspruch 4 oder Anspruch 5, wobei die Serie von Markierungen Symbole am Anfang der Serie und am Ende der Serie umfasst, die symmetrisch zueinander sind.

## Revendications

1. Procédé destiné à procurer un menu d'écran, le procédé comprenant les opérations consistant à :
générer un écran de menu qui affiche une ligne de référence au niveau d'une position fixe, affiche à la fois un élément de menu sélectionné et un élément de sous-menu sélectionné parmi une pluralité d'éléments de sous-menu de l'élément de menu sélectionné sur la ligne de référence, la ligne de référence se prolongeant horizontalement sur l'élément de menu sélectionné et l'élément de sous-menu sélectionné, et affiche une série de marqueurs lesquels représentent chacun des éléments du sous-menu suivant un sens orthogonal par rapport à la ligne de référence ; et
combiner l'écran de menu à une vidéo devant être affichée;
cas dans lequel la série de marqueurs est déplacée vers le haut et vers le bas en conformité avec l'élément de sous-menu sélectionné, de sorte que le marqueur correspondant à l'élément de sous-menu sélectionné est aligné avec la ligne de référence afin d'indiquer une position relative de l'élément de sous-menu sélectionné aux autres éléments du sous-menu.

2. Procédé selon la revendication 1, la série de marqueurs indiquant un certain nombre d'éléments parmi la pluralité d'éléments de sous-menu avant l'élément de sous-menu sélectionné et un certain nombre d'éléments parmi la pluralité d'éléments de sous-menu après l'élément de sous-menu sélectionné.

3. Procédé selon l'une quelconque des revendications précédentes, la série de marqueurs comprenant des symboles au niveau de la partie supérieure et de la partie inférieure de la série lesquels sont symétriques les uns par rapport aux autres.

4. Appareil vidéo comprenant :
un combinateur qui combine une vidéo devant être affichée avec des informations spécifiées ; et
un contrôleur qui génère un écran de menu qui affiche une ligne de référence au niveau d'une position fixe, affiche à la fois un élément de menu sélectionné et un élément de sous-menu sélectionné parmi une pluralité d'éléments de sous-menu de l'élément de menu sélectionné sur la ligne de référence, la ligne de référence se prolongeant horizontalement sur l'élément de menu sélectionné et l'élément de sous-menu sélectionné, et affiche une série de marqueurs lesquels représentent chacun des éléments du sous-menu suivant un sens orthogonal par rapport à la ligne de référence ;
cas dans lequel la série de marqueurs est déplacée vers le haut et vers le bas en conformité avec l'élément de sous-menu sélectionné, de sorte que le marqueur correspondant à l'élément de sous-menu sélectionné est aligné avec la ligne de référence afin d'indiquer une position relative de l'élément de sous-menu sélectionné aux autres éléments du sous-menu.

5. Appareil vidéo selon la revendication 4, la série de marqueurs indiquant un certain nombre d'éléments parmi la pluralité d'éléments de sous-menu avant l'élément de sous-menu sélectionné et un certain nombre d'éléments parmi la pluralité d'éléments de sous-menu après l'élément de sous-menu sélectionné.

6. Appareil vidéo selon la revendication 4 ou la revendication 5, la série de marqueurs comprenant des symboles au niveau d'une partie supérieure de la série et d'une partie inférieure de la série lesquels sont symétriques les uns par rapport aux autres.
